# EUROPEAN PATENT APPLICATION

(11) **EP 2 564 907 A2**
(43) Date of publication of application: **06.03.2013**
(21) Application number: 11790000.1
(22) Date of filing: 31.05.2011
(51) Int. Cl.: A63F 13/00, A63F 13/08

(54) **GAME MACHINE**

(30) Priority: 03.06.2010 KR 20100052139
(71) Applicant: Tovis Co., Ltd., Yeonsu-gu, Incheon 406-840 (KR)
(72) Inventor: HAN, Chang il, Goyang-si Gyeonggi-do 411-372 (KR); KIM, Yong beom, Incheon 406-736 (KR); KIM, Yang rae, Incheon 406-736 (KR)
(74) Representative: Manitz, Finsterwald & Partner GbR
(86) International application number: PCT/KR2011/003964
(87) International publication number: WO 2011/152642

(57) **Abstract**

A game machine includes: a cable capable of transmitting electric power and data signal; one or more function modules which are connected to the cable and are configured to perform a predetermined function respectively; and a main controller which generates data signal for controlling the function modules and transmits the generated data signal and electric power supplied from outside to the function modules via the cable. Since data signal such as image signal or audio signal and electric power are combined and are then transmitted via one cable, the data signal wiring and the electric power wiring between the main controller and the function module of a game machine can be unified as one, so wiring can be simplified. Accordingly, manufacturing and maintenance become easy and cost for the same can also be saved.

## Description

### [Field of the Invention]

The present invention relates to a game machine.

### [Background Art]

With a rapid expansion of a game industry, demand of a game machine which is provided at a casino or a game center has risen.

A slot machine or a pachinko machine is a typical game machine, and when games such as casino are serviced using such game machines, there were attempts to display various image data in addition to game images to increase interest of games. For example, there was an attempt to display video images or to provide Internet search function beside game images in a type of PIP(Picture in picture) by adopting a display panel instead of a mechanical reel which is often used for a game machine to create the same effect as the rotation of a reel using display image data.

However, in order to realize such a technology, many function modules for displaying various images should be provided, and images signals and audio signals for driving the modules should be provided for the respective function modules and electrical wirings for supplying electricity to the respective function modules should also be provided.

Accordingly, there was a problem in that the data lines and the electrical wirings inside the game machine increase as the function modules for realizing various functions increase, so manufacturing cost of the game machine is increased and wirings become complicated so that repair of disorder of the game machine requires long time and high maintenance cost.

### [Detailed Description of the Invention]

### [Technical Problem]

The present invention has been made in an effort to provide a game machine in which cables for data transmitting signal and electric power of a game machine are combined so as to simplify wirings for connecting various function modules for performing functions respectively.

### [Technical Solution]

A game machine according to an embodiment of the present invention includes: a cable capable of transmitting electric power and data signal; one or more function modules which are connected to the cable and are configured to perform a predetermined function respectively; and a main controller which generates data signals for controlling the function modules and transmits the generated data signal and electric power supplied from outside to the function modules via the cable.

The main controller may include a signal encoder which encodes the generated data signal into a type of being transmittable via the cable, an electric power supplier which receives electric power from the outside, and a first transform circuit which composes the data signal and the electric power to produce a composed signal. In addition, the respective function module may include a second transform circuit which decomposes the composed signal received via the cable into the data signal and the electric power, and a signal decoder which decodes the decomposed data signal.

The cable may be a LAN cable, and wherein the signal encoder is a LAN encoder and the signal decoder is a LAN decoder.

The function module may be plural, and the data signals generated by the main controller may have respectively a predetermined inherent ID for the respective function modules, and the plurality of the function modules may selectively receive the data signal having its inherent ID among the data signals transmitted via the cable.

### [Advantageous Effects]

According to the present invention, since data signal such as image signal or audio signal and electric power are combined and are then transmitted via one common cable, the data signal wiring and the electric power wiring between the main controller and the function module of a game machine can be unified as one, so wiring can be simplified. Accordingly, manufacturing and maintenance become easy and cost for the same can also be saved.

Furthermore, the respective function modules are connected to one common cable, the separation and replacement of the respective function modules become easy.

### [Brief Description of Drawings]

FIG. 1 is a block diagram of a game machine according to an embodiment of the present invention.
FIG. 2 is a drawing showing an example of a game machine according to an embodiment of the present invention.

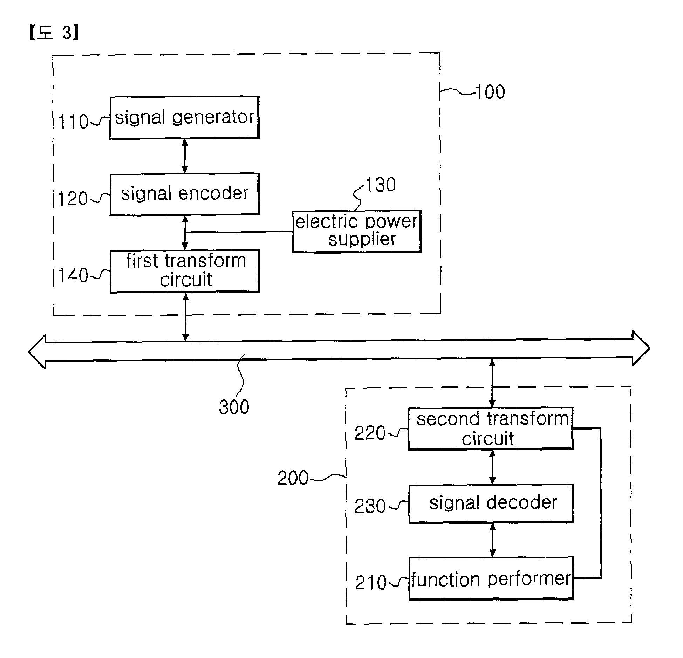

FIG. 3 is a block diagram showing structure and connection of a main controller and function modules of a game machine according to an embodiment of the present invention.

### [Detailed Description of the Embodiments]

An embodiment of the present invention will be described hereinafter with reference to the accompanied drawings.

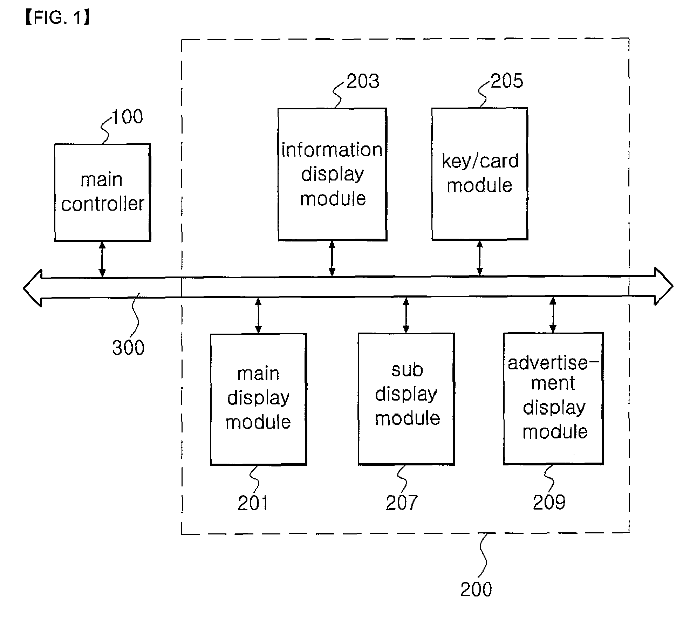

First, referring to FIG. 1, a game machine according to an embodiment of the present invention includes a main controller 100 and one or more function modules 200, and the main controller 100 and the function modules 200 are connected to one another by a cable 300.

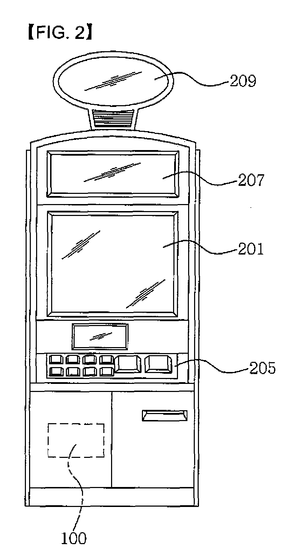

The function modules 200 are unit modules for respectively performing assigned function among various functions of the game machine, and for example the function modules 200 may include a main display module 201 for displaying main images for a game, an information display module 203 for displaying various information for a game, a key/card module 205, a sub display module 207 for displaying sub images, an advertisement display module 209 for displaying an advertisement, and the like. The function modules 200 as such may be disposed at predetermined positions of the game machine as exemplarily shown in FIG. 2.

At this time, the respective function modules 200 may include various components such as a display, a controller, a memory, or the like for performing inherently assigned functions.

The main controller 100 generates data signals for controlling the function modules 200, and transmits the generated data signal and the electrical power supplied from the outside to the function modules 200 via the cable.

The cable 300 may be an arbitrary cable which can transmit the electrical power as well as the signals converted from data signals such as an image signal or an audio signal, and for example may be realized as a cable which can perform electric power transmission and data signal transmission such as LAN cable, a cable which can be able to perform the Power Line Communication (PLC). In more detail, the cable 300 may be a LAN cable of an HDBaseT type, and hereinafter the description will be made for the case that the cable 300 is a LAN cable.

The main controller 100 includes a signal generator 110 for generating the data signal. For example, the signal generator 110 may include an input portion which receives a command for generating the data signal such as an image signal or an audio signal, a data signal input/output portion for inputting and outputting the data signal, a compression portion for compressing the data signal, a controller, a memory, and the like. The signal generator 110 may be realized in the same way of a main controller of a conventional common game machine, so further detailed description for the same will be omitted.

The main controller 100 includes a signal encoder 120 for encoding the signal generated by the signal generator 110 into a type which can be able to be transmitted through the cable 300. For example, the signal encoder 120 may be a LAN encoder which converts the data signal into a signal which can be able to be transmitted through the LAN cable of an HDBaseT type.

Meanwhile, the main controller 100 includes an electric power supplier 130 which receives electric power from the outside. The electric power supplier 130 may supply the electric power received from the outside in the form of a direct current. The electric power supplied from the electric power supplier 130 may be used in the main controller 100 or may be supplied to the function modules 200 via the cable 300.

Further, the main controller 100 includes a first transform circuit 140 which composes the data signal and the electric power. The first transform circuit 140 composes the data signal generated by the signal generator 110 and the electric power supplied from the electric power supplier 130 to produce a transmission signal in a type of being transmittable via the cable 300.

Each of one or more function modules 200 may include a function performer 210 for performing a assigned function. The function performer 210 may include various parts such as a controller, a memory, a display, etc for performing the given function. Since the function performer 210 may be realized in the same way of a function performer of a conventional game machine, further detailed description for the same will be omitted.

The function module 200 may include a second transform circuit 220 which decomposes the composed signal received via the cable 300 into the data signal and the electric power. The second transform circuit 220 may decompose the composed signal received from the main controller 100 via the cable 300 into the transformed data signal (i.e., data signal transformed in a type of being transmittable via a LAN cable) and the electric power.

For example, the first transform circuit 140 and the second transform circuit 220 may be realized respectively as matching transformer circuits which are matched to perform composition and decomposition of the electric power and the data signal.

Further, the function module 200 includes a signal decoder 230 which decodes the transformed data signal into a type of being usable in the function performer 210. In case that the cable 300 is a LAN cable, the signal decoder 230 may be a LAN decoder.

As such the composed signal received via the cable 300 is divided into the transformed data signal and the electric power by the second transform circuit 220, and the decomposed electric power may be directly supplied to the function performer 210 and may be then used, and the decomposed transformed data signal is decoded by the signal decoder 230 and is then supplied to the function performer 210.

In case that the function modules 200 are plural, the main controller 100 may generate data signals respectively having predetermined inherent ID for the respective function modules, and the respective function modules 200 may selectively receive the data signal with its inherent ID among the plural data signals transmitted via the cable 300. Accordingly, even when a plurality of the function modules 200 exist and the plurality of data signals are transmitted together, the respective function modules 200 can precisely and effectively select the data signal assigned for itself and can operate to perform the allotted function using the selected signal.

The main controller 100 and the function modules 200 may perform the data communication in a time-sharing method or a token method.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a game machine and can be able to be applied to various game machines, so the present invention has an industrial applicability.

## Claims

1. A game machine comprising:
a cable capable of transmitting electric power and data signal;
one or more function modules which are connected to the cable and are configured to perform a predetermined function respectively; and
a main controller which generates data signals for controlling the function modules and transmits the generated data signal and electric power supplied from outside to the function modules via the cable.

2. The game machine of claim 1, wherein the main controller comprises a signal encoder which encodes the generated data signal into a type of being transmittable via the cable, an electric power supplier which receives electric power from the outside, and a first transform circuit which composes the data signal and the electric power to produce a composed signal,
and wherein the respective function module comprises a second transform circuit which decomposes the composed signal received via the cable into the data signal and the electric power, and a signal decoder which decodes the decomposed data signal.

3. The game machine of claim 2, wherein the cable is a LAN cable, and wherein the signal encoder is a LAN encoder and the signal decoder is a LAN decoder.

4. The game machine of claim 1, wherein the function module is plural, and wherein the data signals generated by the main controller have respectively a predetermined inherent ID for the respective function modules, and the plurality of the function modules selectively receive the data signal having its inherent ID among the data signals transmitted via the cable.
